# EUROPÄISCHE PATENTSCHRIFT

(11) **EP 3 096 057 B1**
(45) Veröffentlichungstag und Bekanntmachung des Hinweises auf die Patenterteilung: **13.12.2017**
(21) Anmeldenummer: 16161392.2
(22) Anmeldetag: 21.03.2016
(51) Int. Cl.: F16L 11/12, E03C 1/02, F16L 33/00

(54) **ZUFÜHRLEITUNG ZUM TRANSPORT VON FLÜSSIGEN UND / ODER GASFÖRMIGEN MEDIEN**
SUPPLY LINE FOR TRANSPORTATION OF LIQUID AND/OR GASEOUS MEDIA
CONDUITE D'ARRIVEE DESTINEE A TRANSPORTER DES MILIEUX GAZEUX ET/OU LIQUIDES

(30) Priorität: 20.05.2015 DE 202015102600 U
(43) Veröffentlichungstag der Anmeldung: 23.11.2016
(73) Patentinhaber: REHAU AG + Co, 95111 Rehau (DE)
(72) Erfinder: Ott, Michael, 95111 Rehau (DE); Willert, Manfred, 91257 Pegnitz (DE); Schierjott, Uwe, 95194 Regnitzlosau (DE)

(56) Entgegenhaltungen:
- DE-A1-102004 038 558
- DE-U1- 20 312 276
- DE-U1-202014 006 341
- FR-A1- 2 668 574
- FR-A1- 2 856 335
- GB-A- 2 388 638
- US-A- 3 720 235

## Beschreibung

Die Erfindung betrifft eine Zuführleitung zum Transport von flüssigen und / oder gasförmigen Medien, mit wenigstens einem Lumen, sowie wenigstens einer, das Lumen umschließenden Schicht, deren innere Oberfläche einen freien Querschnitt für den Transport der Medien begrenzt.

Bekannte Zuführleitungen im Stand der Technik werden beispielsweise als sogenannte Panzerschläuche bei der Hausinstallation verwendet. Dabei handelt es sich um Schlauchleitungen in Kurzlängen bis zu etwa 2 m für den Anschluss von Sanitärarmaturen, die aus einem polymeren Schlauch mit einer flexiblen Edelstahlummantelung bestehen.

Die Verwendung derartiger Zuführleitungen hat insbesondere in der Trinkwasserhausinstallation stark zugenommen. Die Zuführleitungen werden dabei insbesondere für den Anschluss von Sanitärarmaturen und Apparaten innerhalb der Trinkwasserhausinstallationen, für unzugängliche Installationen und für zugängliche Installationen wie bspw. als Brauseschläuche für Sanitärarmaturen verwendet.

Weiterhin werden derartige Zuführleitungen außerdem für den Anschluss von Haushaltsgeräten wie Waschmaschinen, Geschirrspülmaschinen und dergleichen verwendet. Da gehören sie zwar nicht zur Trinkwasserhauptinstallation, sie transportieren aber trotzdem teilweise Trinkwasser, dessen Qualität nicht beeinträchtigt werden darf.

Derartige Zuführleitungen aus dem bekannten Stand der Technik sowie weitere Ausrüstungsgegenstände, die zum Transport von insbesondere Trinkwasser eingesetzt werden, müssen dabei bestimmte Anforderungen erfüllen, um eine Gesundheitsschädigung von Verbrauchern auszuschließen. Dabei dürfen von den Zuführleitungen bzw. den Ausrüstungsgegenständen keine Stoffe auf das durchgeleitete Trinkwasser übergehen, ausgenommen gesundheitlich, geruchlich und geschmacklich unbedenkliche Anteile, die technisch unvermeidbar sind.

Für die Prüfung und Bewertung derartiger Zuführleitungen an den Ausrüstungsgegenständen, insbesondere aus Kunststoffen, dienen die Kunststoff-Trinkwasser-Empfehlungen (KTW-Empfehlungen), die von einer Arbeitsgruppe der Trinkwasserkommission des Bundesumweltamtes der BRD an den Stand des Wissens und der Technik angepasst werden. Um mikrobielle Beeinträchtigungen des Trinkwassers durch den Werkstoff der Zuführleitungen auszuschließen, dürfen im Trinkwasserbereich nur solche Werkstoffe eingesetzt werden, die auch nach längerem Kontakt mit Trinkwasser nicht zu einer Vermehrung von Mikroorganismen sowie zu keinen Geschmacksveränderungen führen bzw. nur eine begrenzte Geruchsbildung bei längerem Kontakt aufweisen.

Für die Prüfung und Bewertung der Vermehrung von Mikroorganismen auf Werkstoffen für den Trinkwasserbereich gelten die technischen Regeln des Deutschen Vereins des Gas- und Wasserfaches e.V. (DVGW), insbesondere die technische Regel W 270 (Stand: November 2007).

So beschreibt beispielsweise die DE 10 2004 0385 58 A1 eine Zuführleitung zum Transport von flüssigen und / oder gasförmigen Medien, welche als flexibler Schlauch für Verbindungsschläuche zum Transport von heißen und kalten Medien aus zwei Schichten besteht, wobei die einzelnen Schichten durch Extrudieren einer oder mehrerer Verbindungen auf Basis von Polyethylen gebildet sind, wobei die die innerste Schicht bildende Verbindung eine mittlere Dichte von 0,92 bis 0,96 g/cm³ und einen definierten Schmelzindex aufweist, die zweite Schicht eine mittlere Dichte von 0,8 bis 0,91 g/cm³ und einen definierten Schmelzindex aufweist. Die Zuführleitung soll neben der aus der Verwendung hochdichter Polyethylen-Verbindungen resultierender Wärme-, Chemikalien- und Alterungsbeständigkeit zu einer Schlauchleitung führen, welche nur eine geringe Biegesteifigkeit und Knickneigung zeigt.

Neben der erhöhten Anfälligkeit insbesondere beim Einsatz in der Trinkwasserhausinstallation weist diese Zuführleitung den Nachteil auf, dass insbesondere beim Einsatz für den Anschluss von Haushaltsgeräten wie Waschmaschinen, Geschirrspülmaschinen gerade die geringe Biegesteifigkeit und Knickneigung dazu führt, dass der für den bestimmungsgemäßen Gebrauch dieser Geräte erforderliche Mindestquerschnitt im Inneren der Zuführleitung nicht immer gegeben ist, so dass hier Ausfälle bzw. Schäden durch nicht weitergeleitete Flüssigkeiten auftreten können.

Die FR 2856335 A1 beschreibt ein Verfahren zur Herstellung eines einen zylindrischen Mantel und innere Längsrippen umfassenden Schlauch durch Extrusion, wobei am Ende des Schlauches ein zylindrischer Bereich mit konstanter Dicke ausgebildet wird. Hier soll bei der Herstellung des Schlauches durch Extrusion die Herstellung der Rippen über eine bestimmte Länge kurz unterbrochen werden oder bei der Herstellung des Schlauches die Rippen nachträglich entfernt werden. Dazu dient eine Vorrichtung wie ein Drehmesser um die Rippen so zu entfernen, bis eine glatte oder im Wesentliche glatte Oberfläche erhalten wird.

Die GP 2388638 A offenbart ein flexibles Rohr bzw. einen Schlauch welcher extrudiert ist und eine umlaufende Wand aufweist und einen Kern entlang seiner Längsachse. Der Kern ist dabei über eine Rippe mit der Wand des Schlauches verbunden. Zum Einbringen eines Verbindungsstückes offenbart die GP 2388638 A, dass an einem Ende des Schlauches ein Stück des Kernes bzw. der Rippe getrennt bzw. abgeschnitten wird um das Verbindungsstück über das Anschlussstück in das Innere des Schlauches einzufügen und über das Kupplungsteil mit dem Schlauch kraftschlüssig (Schraubverbindung) zu fixieren.

Die DE 20312276 U1 offenbart einen Wasserschlauch mit innenliegenden Trennstegen mit einem Hauptkörper der ein hohler rohrförmiger Körper aus einem weichen Werkstoff ist mit wenigstens einem Stützabschnitt, wobei eine Seite des Stützabschnitts an einem Abschnitt der Innenwandung des Hauptkörpers festgelegt ist, wobei der Schlauch im Querschnitt verschiedene Geometrien aufweisen kann. Weiter offenbart die DE 20312276 U1, dass ein Teil des Stützabschnittes eines Endes oder beider Enden des Hauptkörpers herausgeschnitten wird, sodass ein Verbindungsstück in dieses jeweilige Ende des Hauptkörpers einbringbar ist.

Die US 3,720,235 A offenbart einen Schlauch mit einem runden Körper der fünf in Längsrichtung angeordnete Rippen aufweist welche getrennt sind durch Nuten, wobei der Schlauch aus einem extrudierten Polyurethan bzw. Polymerwerkstoff hergestellt ist. Die US 3,720,235 A offenbart weiterhin, dass in ein freies Ende des Schlauches ein Verbindungsstück einbringbar ist, wobei das Verbindungsstück fünf Rippen aufweist, welche die selbe Kontur aufweisen wie die Nuten des Schlauches und wobei die Rippen in den Nuten des Schlauches angeordnet bzw. eingepresst sind zeigen.

Hier setzt die Erfindung ein, die sich die Aufgabe gestellt hat, die Nachteile des bekannten Standes der Technik erfolgreich zu überwinden und eine Zuführleitung zum Transport von flüssigen und / oder gasförmigen Medien aufzuzeigen, die wirtschaftlich und kostengünstig herstellbar ist, die sowohl in der normalen Installation als auch in der Trinkwasserhausinstallation einsetzbar ist, bei deren Benutzung das Lumen immer einen Mindestdurchfluss bzw. die das Lumen umschließende Schicht immer einen freien Querschnitt für den Transport der Medien aufweist.

Erfindungsgemäß wird diese Aufgabe durch die Merkmale des Anspruches 1 gelöst. Weitere vorteilhafte Ausgestaltungen sind in den Unteransprüchen beschrieben.

Es hat sich überraschend herausgestellt, dass eine Zuführleitung zum Transport von flüssigen und / oder gasförmigen Medien, mit wenigstens einem Lumen, sowie wenigstens einer, das Lumen umschließenden Schicht, deren innere Oberfläche einen freien Querschnitt für den Transport der Medien begrenzt, sich dadurch auszeichnet, dass an der inneren Oberfläche der Schicht wenigstens ein in das Lumen ragender Steg angeordnet ist, wobei wenigstens ein freies Ende des Steges vom freien Ende der Zuführleitung beabstandet angeordnet ist. Überraschenderweise werden gerade durch eine derartige erfindungsgemäße Zuführleitung sowohl die Anforderungen an die Trinkwasserhausinstallation erfüllt, die Herstellungskosten erheblich reduziert sowie außerdem sichergestellt, dass bei deren Verwendung das Lumen der erfindungsgemäßen Zuführleitung immer einen Mindestdurchflussquerschnitt aufweist und beim Anschluss von Zubehörteilen bzw. beim Anschluss an Hausgeräte immer eine flüssigkeitsdichte Verbindung insbesondere an den freien Enden der erfindungsgemäßen Zuführleitung realisierbar ist. Erfindungsgemäß ist die Zuführleitung so ausgebildet, dass wenigstens ein freies Ende des Steges über eine Distanz D vom freien Ende der Zuführleitung beabstandet angeordnet ist. Diese Distanz ist abhängig vom Innendurchmesser der Zuführleitung und entspricht vorteilhafterweise etwa der Dicke der das Lumen umgebenden Schicht.

In einer vorteilhaften Ausgestaltung ist die erfindungsgemäße Zuführleitung so ausgebildet, dass die Distanz D etwa 5 bis 100 mm, bevorzugt 5 bis 75 mm, äußerst bevorzugt 5 bis 25 mm entspricht. Je nach Abhängigkeit der Länge bzw. des Durchmessers der erfindungsgemäßen Zuführleitung ist sichergestellt, dass bei Anschluss von Zubehörteilen sowie an ein Haushaltsgerät immer eine flüssigkeitsdichte, kostengünstige Verbindung herstellbar ist. Dabei hat es sich weiterhin als vorteilhaft herausgestellt, dass wenigstens zwei, voreinander beabstandet angeordnete Stege radial in das Lumen ragen. Hierdurch lässt sich einerseits die erfindungsgemäße Zuführleitung wirtschaftlich und kostengünstig herstellen und andererseits ist durch die im Lumen angeordneten Stege sichergestellt, dass bei bestimmungsgemäßer Verwendung der erfindungsgemäßen Zuführleitung, auch wenn diese geknickt bzw. gebogen ist, immer ein Mindestdurchfluss im Lumen gewährleistet ist.

Vorteilhafterweise sind dabei die in das Lumen ragenden Stege axial in Leitungsrichtung einstückig an der das Lumen umgebenden Schicht angeordnet, was eine kostengünstige Herstellung bei gleichzeitig flexibler und stabiler Ausführung der erfindungsgemäßen Zuführleitung sicherstellt.

Die erfindungsgemäße Zuführleitung ist weiterhin vorteilhafterweise so ausgebildet, dass die Stege im Querschnitt etwa prismatisch, dreieckig, rund, halbrund, T-förmig und dergleichen ausgebildet sind. Durch die Wahl der Geometrie der Stege ist somit in Abhängigkeit vom Durchmesser der erfindungsgemäßen Zuführleitung sowie der Wandstärke der das Lumen umgebenden Schicht sichergestellt, dass bei bestimmungsgemäßer Verwendung der erfindungsgemäßen Zuführleitung beispielsweise beim Abknicken bzw. Biegen immer ein Mindestdurchfluss durch das Lumen gewährleistet ist.

Dabei hat es sich überraschenderweise als äußerst vorteilhaft herausgestellt, dass die Stege äquidistant zueinander an der das Lumen umgebenden Schicht angeordnet sind. Es liegt jedoch auch im Rahmen der Erfindung, dass die Stege in unterschiedlichen Abständen voneinander angeordnet sind. Erfindungsgemäß sind die Stege radial in einem Winkel von etwa 120° voneinander beabstandet angeordnet, was insbesondere die Biegestabilität der erfindungsgemäßen Zuführleitung optimiert, während gleichzeitig bei einem Abknicken der erfindungsgemäßen Zuführleitung in bspw. einem rechten Winkel immer ein Mindestquerschnitt des Lumens verfügbar und somit ein Mindestdurchfluss der erfindungsgemäßen Zuführleitung sichergestellt ist.

Weiterhin vorteilhaft bei der erfindungsgemäßen Zuführleitung ist, dass die der Schicht gegenüberliegenden, freien Enden der Stege etwa 1 bis 20 mm, bevorzugt etwa 1 bis 10 mm radial in das Lumen ragen. Weiterhin vorteilhaft ist, dass die Breite der, an der Schicht angeordneten, Stege etwa der Dicke der das Lumen umgebenden Schicht entspricht. Vorteilhafterweise ist die erfindungsgemäße Zuführleitung so ausgebildet, dass die Breite der, an der Schicht angeordneten, Stege und / oder der Schicht etwa 1 bis 10 mm, bevorzugt etwa 1 bis 5 mm beträgt. Durch die unterschiedliche Wahl der Geometrie der Stege bzw. der das Lumen umgebenden Schicht kann eine erfindungsgemäße Zuführleitung zur Verfügung gestellt werden, die nicht nur kostengünstig und wirtschaftlich herstellbar ist, sondern die insbesondere beim Transport von flüssigen Medien jederzeit sicherstellt, dass das Lumen der erfindungsgemäßen Zuführleitung einen Mindestdurchflussquerschnitt aufweist, auch wenn die erfindungsgemäße Zuführleitung um 90° oder nahezu um 180° gebogen bzw. geknickt ist.

Es hat sich weiterhin als vorteilhaft erwiesen, dass in der Schicht und / oder in wenigstens einem Steg der erfindungsgemäßen Zuführleitung wenigstens eine Leitung angeordnet ist. Diese Leitung dient vorteilhafterweise dazu, elektrische und / oder optische Signale zu übertragen, so dass eine derart ausgebildete, erfindungsgemäße Zuführleitung beispielsweise auch bei Haushaltsgeräten wie Waschmaschinen, Geschirrspülern und dergleichen einsetzbar ist. Die in der Schicht und / oder dem Steg integrierte Leitung dient vorteilhafterweise dazu beispielsweise einen sogenannten "Aquastop" des Hausgerätes zu steuern während gleichzeitig die erfindungsgemäße Zuführleitung mit dem Zuführen bzw. auch dem Abführen von flüssigen Medien des Haushaltsgerätes einsetzbar ist.

Die erfindungsgemäße Zuführleitung zeichnet sich weiterhin dadurch aus, dass an der dem freien Ende des Steges gegenüberliegenden Seite der Schicht wenigstens eine Vertiefung angeordnet ist. Diese führt vorteilhafterweise dazu, dass der Materialverbrauch für die Herstellung der erfindungsgemäßen Zuführleitung reduziert ist und durch die Geometrie der Vertiefung, welche im Querschnitt gesehen etwa prismatisch, dreieckig, rund, halbrund und dergleichen ausgebildet ist, eine zusätzliche Stabilisierung der erfindungsgemäßen Zuführleitung realisiert ist.

Es hat sich weiterhin als vorteilhaft herausgestellt, dass in der Vertiefung der Schicht der erfindungsgemäßen Zuführleitung wenigstens eine Leitung angeordnet ist, welche dazu dient elektrische und / oder optische Signale zu übertragen. Die Leitung der erfindungsgemäßen Zuführleitung ist dabei beispielsweise als metallisches Kabel, als metallisches Kabel mit einer Kunststoffisolierung bzw. als optisches Kabel ausgebildet.

In einer Weiterbildung der erfindungsgemäßen Zuführleitung ist die das Lumen umgebende Schicht von wenigstens einer zweiten Schicht umgeben. Diese Schicht führt zu einer weiteren positiven Beeinflussung der Festigkeit, der Wärmestandeigenschaften sowie dem mechanischen Schutz der das Lumen umgebenden Schicht.

In einer weiteren vorteilhaften Ausgestaltung ist die erfindungsgemäße Zuführleitung so ausgebildet, dass zwischen der das Lumen umgebenden Schicht und einer darüber angeordneten zweiten Schicht wenigstens eine Leitung angeordnet ist. Diese Leitung, welche beispielsweise als elektrisches Kabel mit einer Isolierung ausgebildet ist, kann dabei spiralförmig auf der das Lumen umgebenden Schicht angeordnet sein, wobei es auch im Rahmen der Erfindung liegt, dass zwei Leitungen vorteilhafterweise parallel nebeneiander, spiralförmig bzw. radial auf der das Lumen umgebenden Schicht angeordnet sind.

Ein weiterer Vorteil der zweiten Schicht wird darin gesehen, dass sowohl bei in der Vertiefung der das Lumen umgebenden Schicht angeordneten Leitungen, als auch bei auf der das Lumen umgebenden Schicht angeordneten Leitungen, diese sowohl geschützt als auch stabilisiert sind und das bei bestimmungsgemäßer Benutzung der erfindungsgemäßen Zuführleitung insbesondere für Hausgeräte keine zusätzlichen Kabel zur Steuerung beispielsweise eines Aquastopps erforderlich sind.

Ebenfalls vorteilhaft ist, dass zwischen der das Lumen umgebenden Schicht und der wenigstens zweiten darüber angeordneten Schicht wenigstens eine Zwischenschicht angeordnet ist.
Diese kann bspw. als Verstärkungsschicht so ausgebildet sein, das sie bspw. aus geflochtenen Strängen einzelner Fäden/Filamente besteht, die die, das Lumen umgebenden Schicht, zumindest teilweise bedecken. Wobei sich vorteilhafterweise mindestens einer der geflochtenen Stränge aus Fäden/Filamenten unterschiedlicher Werkstoffe/ Werkstoffmischungen zusammensetzt. Dieser Strang kann dabei synthetische Fasern aus Polyester einerseits und/oder aus Aramid andererseits aufweisen.
Es liegt weiterhin im Rahmen der Erfindung, das die erfindungsgemäße Zuführleitung zwischen der das Lumen umschließenden Schicht und einer zweiten Schicht eine als Diffusionssperre ausgebildete Zwischenschicht aufweist, welche beispielsweise als metallische Folie ausgebildet ist.

Ebenfalls vorteilhaft bei der erfindungsgemäßen Zuführleitung wird gesehen, dass die Schicht, welche das Lumen umgibt und/oder die diese umgebende weitere Schicht aus einem polymeren Werkstoff hergestellt ist, wie Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polybuten (PB); Polyisobuten (PIB); Polyphthalamid (PPA); Polypyrrol (PPY);Polytetrafluorethylen (PTFE); Polyurethan (PUR); Polyvinylalkohol (PVA); Polyvinylacetat (PVAC); Polyvinylidenchlorid (PVDC) sowie Mischungen aus wenigstens zwei diesen Materialien. Hierdurch kann die Zuführleitung bspw. im an sich bekannten Extrusions- bzw. auch im Koextrusionsverfahren kostengünstig und in der entsprechenden Farbenvielfalt hergestellt werden. Der polymeren Werkstoff der das Lumen umgebenden Schicht und / oder der diese umgebenden zweiten Schicht kann dabei eine Härte Shore D gemäß DIN EN ISO 868 von etwa 40 bis 80, bevorzugt 40 bis 70 aufweisen. Hierdurch kann die erfindungsgemäße Zuführleitung auch in anderen Anwendungsgebieten bspw. als sog. Panzerschlauch oder auch als Tauchermitteldruckschlauch eingesetzt werden.

Es liegt jedoch auch im Rahmen der Erfindung, dass der Werkstoff der Schicht, welche das Lumen umgibt und/oder die diese umgebende weitere Schicht ausgewählt ist aus elastomeren Werkstoffen wie eine gehärte Elastomerzusammensetzung, die eine Mischung umfasst, die mindestens einen natürlichen Kautschuk, Polyisoprenkautschuk, Poly(Styrol-co-butadien)-Kautschuk (SBR), Polybutadienkautschuk (BR), Poly(lsopren-cobutadien)-Kautschuk (IBR), Styrol-Isopren-Butadien-Kautschuk (SIBR), Ethylen-Propylen-Kautschuk (EPR), Ethylen-Propylen-Dien-Kautschuk (EPDM), Polysulfid, Isobutylen/Cyclopentadien-Copolymerkautschuk, Isobutylen/Methylcyclopentadien-Copolymer-Kautschuk, Nitrilkautschuk, Propylenoxidpolymer, sternverzweigten Butylkautschuk und halogenierten, sternverzweigten Butylkautschuk, bromierten Butylkautschuk, chlorierten Butylkautschuk, sternverzweigten Polyisobutylenkautschuk, sternverzweigten, bromierten Butyl (Polyisobutylen/Isopren-Copolymer)-Kautschuk, Poly(Isobutylen-co-p-methylstyrol) und halogeniertes Poly(Isobutylen-co-p-methylstyrol), halogeniertes Poly(Isobutylen-co-isopren-co-p-methylstyrol), Poly(Isobutylen-co-isopren-co-styrol), halogeniertes Poly(Isobutylen-co-isopren-co-styrol), Poly(Isobutylen-co-isopren-co-α-methylstyrol), halogeniertes Poly(Isobutylen-co-isopren-co-α-methylstyrol) oder Mischungen davon enthält.
Es liegt weiter im Rahmend der Erfindung, dass die Schicht, welche das Lumen umgibt und/oder die diese umgebende weitere Schicht hergestellt ist aus einem weichelastischen, polymeren Werkstoff ausgewählt aus der Gruppe der der Thermoplastischen Elastomere bspw. auf Olefinbasis und/oder auf Urethanbasis, der vernetzten thermoplastischen Elastomere auf Olefinbasis, der Thermoplastischen Polyesterelastomere / Thermoplastischen Copolyester, der Styrol-Blockcopolymere (SBS, SEBS, SEPS, SEEPS und MBS) sowie der Thermoplastischen Copolyamide, der weihmacherhaltigen Werkstoffe, bevorzugt Polypropylen, Acrylnitril-Butadien-Styrol-Copolymerisat, Polycarbonat, Polyvinylchlorid, Polymethylmethacrylat, Polyethylenterephthalat, Polyurethan und dgl., sowie aus Mischungen dieser Werkstoffe.
Vorteilhafterweise können somit auch mehrere bzw. verschiedene Schichten mit verschiedenen Eigenschaften wirtschaftlich und kostengünstig hergestellt sowie den Anforderungen an die Zuführleitungen angepasst werden.
Dabei hat sich ebenfalls als vorteilhaft herausgestellt, dass die Schicht aus einem weichelastischen, polymeren Werkstoff hergestellt ist, mit einer Härte Shore A gemäß DIN EN ISO 868 von etwa 60 bis 100, bevorzugt 75 bis 95.
Ein weiterer Vorteil der erfindungsgemäßen Zuführleitung besteht darin, dass schon die das Lumen umgebende Schicht den Kaltwasser- und Warmwassertest nach den KTW-Empfehlungen sowie den Test nach DBGW W 270 (Stand: 11/2007) besteht, insbesondere beim Einsatz eines polymeren Werkstoffes auf Basis von Polyolefinen, so dass die erfindungsgemäße Zuführleitung auch im Sinne eines Trinkwasserschlauches im Temperaturbereich von 20 bis 90 °C eingesetzt werden kann.
Die erfindungsgemäße Zuführleitung kann bei stimmungsgemäßer Benutzung so dimensioniert und ausgebildet sein, dass der Betriebsdruck innerhalb der erfindungsgemäßen Zuführleitung mit einem Innendurchmesser von beispielsweise 8 mm und einer Wandstärke von etwa 2 mm bei 20 °C bei mindestens 0,5 MPa liegt.

Diese vorteilhaften Eigenschaften der erfindungsgemäßen Zuführleitung sind einerseits aus den Dimensionen bzw. der Anordnung der im Lumen angeordneten Stege resultierend, aber auch aus der Wahl der Werkstoffe für die Stege sowie die das Lumen umgebende Schicht und / oder der diese umgebenden weiteren Schichten.

Die erfindungsgemäße Zuführleitung ist somit beispielsweise für Inliner-Schläuche, für metall- oder kunststoffarmierte Sanitärarmaturen-Anschlussschläuche wie beispielsweise Panzerschläuche, Brauseschläuche und dergleichen geeignet.
Darüber hinaus besteht auch die Möglichkeit, beispielsweise die das Lumen umgebende Schicht sowie die darin angeordneten Stege durch geeignete chemische, physikalische und ähnliche Mittel zu vernetzen.

Die erfindungsgemäße Zuführleitung wird dabei im an sich bekannten Extrusionsverfahren bzw. Co-Extrusionsverfahren aus wenigstens einem polymeren Werkstoff hergestellt. Weiterhin wird ein freies Ende der Zuführleitung mit wenigstens einem Mittel so bearbeitet, dass wenigstens ein freies Ende des Steges vom freien Ende der Zuführleitung beabstandet angeordnet ist.
Diese Mittel kann beispielsweise ein Schneidwerkzeug sein, mit dem der in das Lumen ragende Steg am freien Ende der Zuführleitung über eine Distanz D abgetrennt wird. Dabei hat es sich als vorteilhaft herausgestellt, wenn das Mittel im Lumen der erfindungsgemäßen Zuführleitung eine Rotationsbewegung von wenigstens 30° realisiert.
Es liegt weiterhin im Rahmen der Erfindung, dass das Mittel als thermisch aktivierbarer Dorn ausgebildet ist, dessen Außendurchmesser in etwa dem Innendurchmesser des Lumens bzw. der das Lumen umgebenden Schicht der erfindungsgemäßen Zuführleitung entspricht. Dabei wird das Mittel thermisch so aktiviert, dass es eine Temperatur aufweist, welche gleich bzw. größer ist, als die Schmelztemperatur der das Lumen umgebenden Schicht sowie der daran angeordneten Stege der erfindungsgemäßen Zuführleitung.
Durch Einführen des Mittels in das Lumen der erfindungsgemäßen Zuführleitung werden die an den freien Enden der Zuführleitung angeordneten Stege aufgeschmolzen und an der das Lumen umgebenden Schicht radial verteilt.

Es liegt jedoch auch im Rahmen der Erfindung, dass das Mittel ein thermisch aktivierbares Schneidwerkzeug ist, welches thermisch so aktiviert ist, dass es eine Temperatur aufweist, die gleich oder größer ist, als die Schmelztemperatur der das Lumen umgebenden Schicht sowie der daran angeordneten Stege der erfindungsgemäßen Zuführleitung.

Vorteilhafterweise werden zum einen die an den freien Enden der Zuführleitung angeordneten Stege thermisch so aktiviert, dass sie in einen schmelzflüssigen Zustand übergehen und durch die Schneide von der das Lumen umgebenden Schicht der erfindungsgemäßen Zuführleitung abtrennbar sind.
Dabei hat es sich als vorteilhaft herausgestellt, wenn das Mittel im Lumen der erfindungsgemäßen Zuführleitung eine Rotationsbewegung von wenigstens 30° absolviert.

In einer ebenfalls vorteilhaften Ausgestaltung der erfindungsgemäßen Zuführleitung ist an wenigstens einem freien Ende der das Lumen umgebenden Schicht wenigstens eine dritte Schicht angeordnet. Diese Schicht ist mit dem freien Ende der das Lumen umgebenden Schicht vorteilhafterweise stoffschlüssig verbunden und besteht aus dem gleichen Werkstoff wie die das Lumen umgebende Schicht.

In einer weiteren vorteilhaften Ausgestaltung der erfindungsgemäßen Zuführleitung ist diese so ausgebildet, dass die das freie Ende der das Lumen umgebenden Schicht angeordnete dritte Schicht durch eine thermisch aktivierte Verschweißung stoffschlüssig mit dieser verbunden ist. Dabei kann die thermische Aktivierung durch ein elektrisch beheizbares Mittel, durch Laserstrahlung, durch Mikrowellenstrahlung und dergleichen realisiert sein.
Es liegt jedoch auch im Rahmen der Erfindung, dass die wenigstens ein freies Ende des Lumens umgebende dritte Schicht durch an sich bekannte Klebstoffe stoffschlüssig mit dieser verbunden ist. Hier können sowohl lösungsmittelhaltige Klebstoffe als auch Heißschmelzklebstoffe sowie mehrkomponentige Klebstoffsysteme zum Einsatz kommen.

Die erfindungsgemäße Zuführleitung ist vorteilhafterweise weiterhin so ausgebildet, dass die dritte Schicht die dem Lumen entgegengesetzt angeordnete Fläche abdichtend umgreift. Durch diese vorteilhafte Ausgestaltung kann eine erfindungsgemäße Zuführleitung zur Verfügung gestellt werden, die an unterschiedlichste Geometrien bzw. Dimensionen von Zubehörteilen bzw. Hausgeräten abdichtend anschließbar ist.

Es hat sich weiterhin als vorteilhaft herausgestellt, dass das freie Ende der dritten Schicht über eine Distanz V vom freien Ende der das Lumen umgebenden Schicht beabstandet angeordnet ist. Hierdurch wird einerseits die Stabilität und Flexibilität der erfindungsgemäßen Zuführleitung nicht beeinträchtigt und andererseits ist diese wirtschaftlich sowie kostengünstig herstellbar.

Es hat sich weiterhin als vorteilhaft herausgestellt bei der erfindungsgemäßen Zuführleitung, dass die Länge der dritten Schicht etwa ihrem Außendurchmesser entspricht. Hierdurch lässt sich die erfindungsgemäße Zuführleitung wirtschaftlich und kostengünstig herstellen und mit allen bekannten Geometrien bzw. Dimensionen von Zubehörteilen sowie Hausgeräten, flüssigkeitsdicht verbinden.

Die erfindungsgemäße Zuführleitung lässt sich vorteilhafterweise so herstellen, dass die das Lumen umgebende Schicht in ein an sich bekanntes Spritzgießwerkzeug einbringbar ist und das die das freie Ende der erfindungsgemäßen Zuführleitung umgebende dritte Schicht im Spritzgießverfahren stoffschlüssig anbringbar ist.

Die erfindungsgemäße Zuführleitung soll nun an Ausführungsbeispielen, welche die Erfindung nicht beschränken, näher beschrieben werden.

Es zeigen:
- Fig. 1: perspektivische Darstellung einer erfindungsgemäßen Zuführleitung;
- Fig. 2: Schnittdarstellung einer weiteren erfindungsgemäßen Zuführleitung;
- Fig. 3: Schnittdarstellung einer weiteren erfindungsgemäßen Zuführleitung.

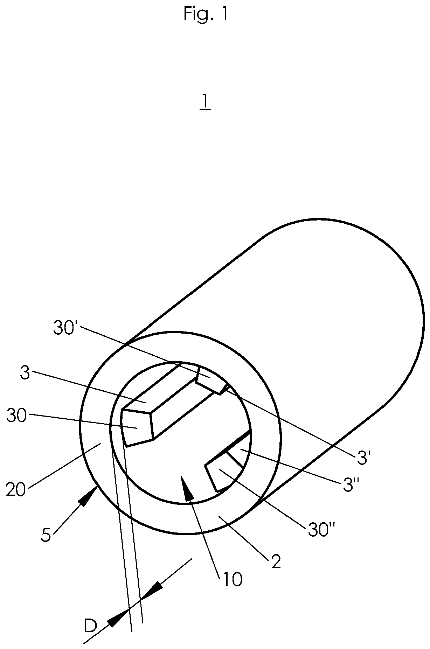

In der Fig. 1 ist eine perspektivische Ansicht einer erfindungsgemäßen Zuführleitung 1 zum Transport von flüssigen und / oder gasförmigen Medien dargestellt, die ein Lumen 10 sowie eine das Lumen 10 umschließende Schicht 2 aufweist.

Die Schicht 2 weist in diesem Ausführungsbeispiel eine Dicke von etwa 2 mm auf und ist im Querschnitt gesehen kreisrund ausgebildet. Das Lumen 10 ist im Querschnitt gesehen ebenfalls kreisrund ausgebildet. Im Lumen 10 sind in diesem Ausführungsbeispiel drei radial in das Lumen 10 ragende Stege 3, 3', 3" angeordnet, wobei diese mit der Schicht 2 einstückig bzw. stoffschlüssig verbunden sind.

Die freien Enden 30, 30', 30" der Stege 3, 3', 3" sind in diesem Ausführungsbeispiel vom freien Ende 5 der Zuführleitung 1 beabstandet angeordnet. Der Abstand des freien Endes 30, 30', 30" des Steges 3, 3', 3" ist in diesem Ausführungsbeispiel eine Distanz D mit etwa 20 mm.

Die Stege 3, 3', 3", welche einstückig mit der das Lumen 10 umgebenden Schicht 2 verbunden sind, sind in diesem Ausführungsbeispiel im Querschnitt etwa prismatisch ausgebildet und in einem Winkel von etwa 120° zueinander beabstandet angeordnet.

Die Stege 3, 3', 3" sind axial in Leitungsrichtung des Lumens 10 den bzw. der Schicht 2 der erfindungsgemäßen Zuführleitung 1 über die gesamte Länge ausgebildet und weisen eine an der Schicht 2 eine Breite von etwa 3 mm auf.

Die Distanz D des freien Endes 30, 30', 30" des Steges 3, 3', 3" entspricht in diesem Ausführungsbeispiel etwa der doppelten Dicke der das Lumen 10 umgebenden Schicht 2.

In diesem Ausführungsbeispiel besteht die das Lumen 10 umgebende Schicht 2 aus einem weichelastischen, polymeren Werkstoff, mit einer Härte Shore A gemäß DIN EN ISO 868 von etwa 70.
Der Werkstoff der das Lumen 10 umgebenden Schicht 2 beruht in diesem Ausführungsbeispiel auf Basis eines Polyolefins, insbesondere besteht er aus einem Polyethylen.

Es hat sich weiterhin als vorteilhaft bei der erfindungsgemäßen Zuführleitung 1 herausgestellt, dass die Distanz D des Abstands der freien Enden 30, 30', 30" der Stege 3, 3', 3" in etwa dem Radius der das Lumen 10 umgebenden Schicht 2 entspricht.

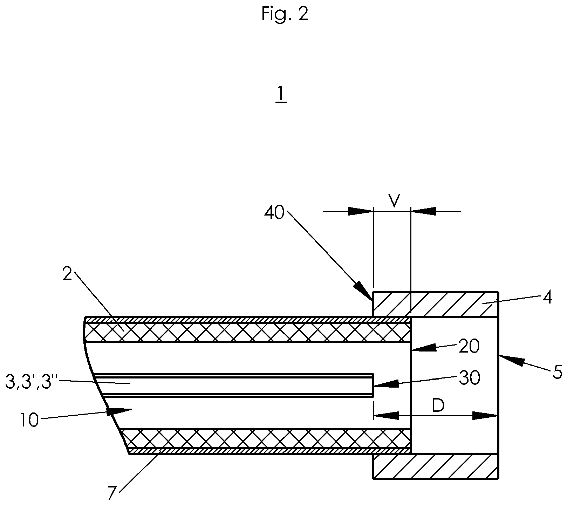

In der Fig. 2 ist eine Schnittdarstellung einer weiteren erfindungsgemäßen Zuführleitung 1 dargestellt.

Die erfindungsgemäße Zuführleitung 1 weist dabei ein Lumen 10 sowie eine das Lumen 10 umgebende Schicht 2 auf. In diesem Ausführungsbeispiel ist an der das Lumen 10 umgebende Schicht 2 eine zweite Schicht 7 angeordnet, die etwa die halbe Dicke der Schicht 2 aufweist.

Im Lumen 10 der erfindungsgemäßen Zuführleitung 1 ist im Schnitt ein Steg 3 dargestellt, dessen freies Ende 30 vom freien Ende 20 der Schicht 2 beabstandet angeordnet ist. Bedingt durch die Schnittdarstellung sind die Stege 3', 3" gemäß der Figur 1 nicht sichtbar, aber ebenfalls beabstandet vom freien Ende 20 der Schicht 2 beabstandet angeordnet.

In diesem Ausführungsbeispiel ist die erfindungsgemäße Zuführleitung 1 so ausgebildet, dass an einem freien Ende 20 der Schicht 2 eine dritte Schicht 4 angeordnet ist, welche etwa die gleiche Dicke aufweist wie die Schicht 2.

Die dritte Schicht 4 ist dabei so ausgebildet, dass sie mit ihrem einem freien Ende 40 die dem Lumen 10 gegenüberliegend angeordnete Fläche der Schicht 2, 7 abdichtend umgreift.

Dabei ist die dritte Schicht 4 so auf der Schicht 2, 7 angeordnet, dass das freie Ende 40 der dritten Schicht 4 über eine Distanz V vom freien Ende 20 der Schicht 2, 7 beabstandet angeordnet ist. Die Distanz V ist dabei zwischen 5 bis 100 mm, bevorzugt zwischen 10 und 50 mm dimensioniert.

In diesem Ausführungsbeispiel ist die erfindungsgemäße Zuführleitung 1 weiterhin so ausgebildet, dass das freie Ende 30 des Steges 3 sowohl beabstandet zum freien Ende 20 der das Lumen 10 umgebenden Schicht 2 als auch zum freien Ende 5 der Zuführleitung 1 über eine Distanz D beabstandet angeordnet ist. Die Distanz D ist in diesem Ausführungsbeispiel etwa 70 mm.
Bedingt durch die Schnittdarstellung sind die Stege 3', 3" gemäß der Figur 1 nicht sichtbar, aber sowohl beabstandet zum freien Ende 20 der das Lumen 10 umgebenden Schicht 2 als auch zum freien Ende 5 der Zuführleitung 1 beabstandet über eine Distanz D angeordnet.

Der Werkstoff der Schicht 2 ist in diesem Ausführungsbeispiel ein Polyurethan mit einer Härte Shore A gemäß DIN EN ISO 868 von etwa 70
Die zweite Schicht 7 weist in diesem Ausführungsbeispiel eine Dicke von etwa 0,5 mm auf. Die Schicht 7 ist aus einem thermoplastischen Polyesterelastomer hergestellt und weist eine Härte Shore A gemäß DIN EN ISO 868 von etwa 92 auf.

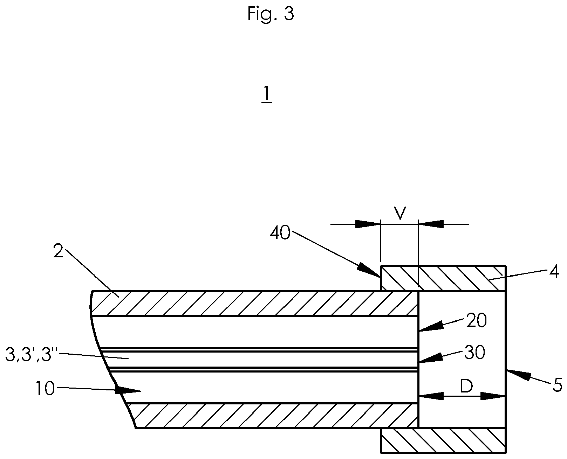

In der Fig. 3 ist eine Schnittdarstellung einer weiteren erfindungsgemäßen Zuführleitung 1 dargestellt.

Die Zuführleitung 1 zum Transport von flüssigen und / oder gasförmigen Medien weist ein Lumen 10 sowie wenigstens eine, das Lumen 10 umschließende, Schicht 2 auf, deren innere Oberfläche einen freien Querschnitt für den Transport der Medien begrenzt.

An der inneren Oberfläche der Schicht 2 ist in diesem Ausführungsbeispiel ein Steg 3 angeordnet, der in das Lumen 10 hineinragt und dessen freies Ende 30 vom freien Ende 5 der Zuführleitung 1 beabstandet angeordnet ist.
Bedingt durch die Schnittdarstellung sind die Stege 3', 3" gemäß der Figur 1 nicht sichtbar, aber ebenfalls zum freien Ende 5 der Zuführleitung 1 beabstandet angeordnet.

Die erfindungsgemäße Zuführleitung 1 weist am freien Ende 20 der Schicht 2 eine dritte Schicht 4 auf, welche etwa die gleiche Dicke von etwa 5 mm aufweist, wie die Schicht 2.

Die erfindungsgemäße Zuführleitung 1 ist weiterhin so ausgebildet, dass das freie Ende 30 des Steges 3 über die Distanz D zum freien Ende 5 der Zuführleitung 1 beabstandet ist und dass das freie Ende 30 des Steges 3 mit dem freien Ende 20 der Schicht 2 bündig abschließt. Die Distanz D ist in diesem Ausführungsbeispiel etwa 50 mm.
Bedingt durch die Schnittdarstellung sind die Stege 3', 3" gemäß der Figur 1 nicht sichtbar. Das (nicht sichtbare) freie Ende 30', 30" des Steges 3', 3" ist über die Distanz D zum freien Ende 5 der Zuführleitung 1 beabstandet und schließt mit dem freien Ende 20 der Schicht 2 bündig ab. Die Distanz D ist in diesem Ausführungsbeispiel etwa 50 mm.

Die erfindungsgemäße Zuführleitung 1 ist in diesem Ausführungsbeispiel so ausgebildet, dass das freie Ende 40 der dritten Schicht 4 über eine Distanz V vom freien Ende 20 der Schicht 2 beabstandet angeordnet ist. Über die Distanz V ist das freie Ende 40 der dritten Schicht 4 flüssigkeitsdicht mit dem freien Ende 20 der Schicht 2 verbunden.

In diesem Ausführungsbeispiel ist die erfindungsgemäße Zuführleitung 1 weiterhin so ausgebildet, dass im Querschnitt gesehen die das Lumen 10 umgebende Schicht 2 kreisrund ausgebildet ist sowie einen Durchmesser von etwa 10 mm aufweist und das die, das freie Ende 20 der Schicht 2 umgebende, dritte Schicht 4 im Querschnitt ebenfalls kreisrund ausgebildet ist mit einem Durchmesser von 20 mm.

Die Breite des Steges 3, welcher einstückig mit der Schicht 2 verbunden ist, beträgt in diesem Ausführungsbeispiel etwa 5 mm. Weiterhin ist der Steg 3 der erfindungsgemäßen Zuführleitung 1 so ausgebildet, dass er im Querschnitt prismatisch ausgebildet ist und über eine Distanz von etwa 5 mm in das von der Schicht 2 umschlossene Lumen 10 hineinragt.

Die erfindungsgemäße Zuführleitung 1 ist in diese Ausführungsbeispiel ebenfalls so ausgebildet, dass im Lumen 10 insgesamt drei Stege 3, 3', 3" angeordnet sind, die äquidistant zueinander angeordnet und über etwa 120° im Lumen 10 der erfindungsgemäßen Zuführleitung 1 angeordnet sind.

Durch die erfindungsgemäße Zuführleitung 1 ist es erstmals überraschenderweise möglich, verschieden dimensionierte Zubehörteile sowie Anschlüsse von Hausgeräten flüssigkeitsdicht zu verbinden und bei bestimmungsgemäßer Verwendung der erfindungsgemäßen Zuführleitung 1 ist immer sichergestellt, dass ein Mindestquerschnitt des Lumens 10 der erfindungsgemäßen Zuführleitung 1 für den Transport von flüssigen und / oder gasförmigen Medien nutzbar ist.

## Patentansprüche

1. Zuführleitung (1) zum Transport von flüssigen und / oder gasförmigen Medien, mit wenigstens einem Lumen (10), sowie wenigstens einer, das Lumen (10) umschließenden, Schicht (2, 4), deren innere Oberfläche einen freien Querschnitt für den Transport der Medien begrenzt, wobei an der inneren Oberfläche der Schicht (2) wenigstens ein in das Lumen (10) ragender Steg (3, 3', 3") angeordnet ist, wobei wenigstens ein freies Ende (30, 30', 30") des Steges (3, 3', 3") über eine Distanz D vom freien Ende (5) der Zuführleitung (1) beabstandet angeordnet ist, **dadurch gekennzeichnet, dass** im Lumen (10) drei radial in das Lumen (10) ragende Stege (3, 3', 3") angeordnet sind, dass die Schicht (2, 7) aus einem weichelastischen, polymeren Werkstoff hergestellt ist, mit einer Härte Shore A gemäß DIN EN ISO 868 von etwa 60 bis 100, bevorzugt 75 bis 95, dass die Stege (3, 3', 3") radial in einem Winkel von etwa 120° voneinander beabstandet angeordnet sind.

2. Zuführleitung (1) nach Anspruch 1, **dadurch gekennzeichnet, dass** die Distanz D etwa der Dicke der Schicht (2) entspricht.

3. Zuführleitung (1) nach einem der vorhergehenden Ansprüche, **dadurch gekennzeichnet, dass** die Distanz D etwa 5 bis 100 mm, bevorzugt 5 bis 75 mm, äußerst bevorzugt 5 bis 25 mm entspricht.

4. Zuführleitung (1) nach einem der vorhergehenden Ansprüche, **dadurch gekennzeichnet, dass** die Stege (3, 3', 3") im Querschnitt etwa prismatisch, dreieckig, rund, halbrund, T-förmig und dergleichen ausgebildet sind.

5. Zuführleitung (1) nach einem der vorhergehenden Ansprüche, **dadurch gekennzeichnet, dass** die Stege (3, 3', 3") äquidistant zueinander an der Schicht (2) angeordnet sind.

6. Zuführleitung (1) nach einem der vorhergehenden Ansprüche, **dadurch gekennzeichnet, dass** die Schicht (2) von wenigstens einer zweiten Schicht (7) umgeben ist.

7. Zuführleitung (1) nach einem der vorhergehenden Ansprüche, **dadurch gekennzeichnet, dass** an wenigstens einem freien Ende (20) der Schicht (2) wenigstens eine dritte Schicht (4) angeordnet ist.

8. Zuführleitung (1) nach Anspruch 7, **dadurch gekennzeichnet, dass** die dritte Schicht (4) die dem Lumen (10) entgegengesetzt angeordnete Fläche der Schicht (2) abdichtend umgreift.

9. Zuführleitung (1) nach Anspruch 7, **dadurch gekennzeichnet, dass** das freie Ende (40) der dritten Schicht (4) über eine Distanz V vom freien Ende (20) der Schicht (2) beabstandet angeordnet ist.

## Claims

1. A supply line (1) for the transportation of liquid and / or gaseous media, having at least one lumen (10) and at least one layer (2, 4) surrounding the lumen (10), the internal surface of which delimits a free cross-section for the transportation of the media, wherein on the internal surface of the layer (2) at least one rib (3, 3', 3") projecting into the lumen (10) is arranged, wherein at least one free end (30, 30', 30") of the rib (3, 3', 3") is arranged at a distance D away from the free end (5) of the supply line (1), **characterised in that**, in the lumen (10), three ribs (3, 3', 3") are arranged projecting radially into the lumen (10), that the layer (2, 7) is made from a flexible polymeric material having a Shore hardness in accordance with DIN EN ISO 868 of about 60 to 100, preferably 75 to 95, that the ribs (3, 3', 3") are arranged radially spaced apart from one another at an angle of about 120°C.

2. The supply line (1) according to claim 1, **characterised in that** the distance D approximately corresponds to the thickness of the layer (2).

3. The supply line (1) according to one of the preceding claims, **characterised in that** the distance D corresponds to approximately 5 to 100 mm, preferably 5 to 75 mm, extremely preferably 5 to 25 mm.

4. The supply line (1) according to one of the preceding claims, **characterised in that** the ribs (3, 3', 3") are formed with a cross-section which is, for example, prismatic, triangular, circular, semi-circular, T-shaped or similar.

5. The supply line (1) according to one of the preceding claims, **characterised in that** the ribs (3, 3', 3") are arranged on the layer (2) equidistantly from one another.

6. The supply line (1) according to one of the preceding claims, **characterised in that** the layer (2) is surrounded by at least one second layer (7).

7. The supply line (1) according to one of the preceding claims, **characterised in that** on at least one free end (20) of the layer (2) at least one third layer (4) is arranged.

8. The supply line (1) according to claim 7, **characterised in that** the third layer (4) encompasses in a sealing manner the surface of the layer (2) arranged opposite the lumen (10).

9. The supply line (1) according to claim 7, **characterised in that** the free end (40) of the third layer (4) is arranged at a distance V away from the free end (20) of the layer (2).

## Revendications

1. Conduite d'alimentation (1) destinée au transport de fluides liquides et/ou gazeux, comprenant au moins une cavité (10) ainsi qu'au moins une couche (2, 4) entourant la cavité (10), dont la surface intérieure limite une section transversale libre pour le transport des fluides, au moins une nervure (3, 3', 3") faisant saillie dans la cavité (10) étant disposée sur la surface intérieure de la couche (2), au moins une extrémité libre (30, 30', 30") de la nervure (3, 3', 3") étant disposée à écart de l'extrémité libre (5) de la conduite d'alimentation (1) sur une distance D, **caractérisée en ce que** trois nervures (3, 3', 3") faisant saillie radialement dans la cavité (10) sont disposées dans la cavité (10), **en ce que** la couche (2, 7) est fabriquée dans un matériau polymère, élastique et souple, ayant une dureté Shore A selon la norme DIN EN ISO 868 d'environ 60 à 100, de préférence de 75 à 95, **en ce que** les nervures (3, 3', 3") sont disposées de manière distancée les unes des autres radialement dans un angle d'environ 120°.

2. Conduite d'alimentation (1) selon la revendication 1, **caractérisée en ce que** la distance D correspond approximativement à l'épaisseur de la couche (2).

3. Conduite d'alimentation (1) selon l'une quelconque des revendications précédentes, **caractérisée en ce que** la distance D correspond approximativement à une valeur de 5 à 100 mm, de préférence de 5 à 75 mm, de manière extrêmement préférée de 5 à 25 mm.

4. Conduite d'alimentation (1) selon l'une quelconque des revendications précédentes, **caractérisée en ce que** les nervures (3, 3', 3"), en section transversale, sont réalisées approximativement de manière prismatique, triangulaire, ronde, demi-ronde, en forme de T et similaire.

5. Conduite d'alimentation (1) selon l'une quelconque des revendications précédentes, **caractérisée en ce que** les nervures (3, 3', 3") sont disposées sur la couche (2) de manière équidistante les unes par rapport aux autres.

6. Conduite d'alimentation (1) selon l'une quelconque des revendications précédentes, **caractérisée en ce que** la couche (2) est entourée par au moins une deuxième couche (7).

7. Conduite d'alimentation (1) selon l'une quelconque des revendications précédentes, **caractérisée en ce qu'**au moins une troisième couche (4) est disposée sur au moins une extrémité libre (20) de la couche (2).

8. Conduite d'alimentation (1) selon la revendication 7, **caractérisée en ce que** la troisième couche (4) entoure de manière étanche la surface de la couche (2), disposée à l'opposé de la cavité (10).

9. Conduite d'alimentation (1) selon la revendication 7, **caractérisée en ce que** l'extrémité libre (40) de la troisième couche (4) est disposée à écart de l'extrémité libre (20) de la couche (2) sur une distance V.
